# EUROPÄISCHE PATENTSCHRIFT

(11) **EP 2 138 030 B1**
(45) Veröffentlichungstag und Bekanntmachung des Hinweises auf die Patenterteilung: **05.01.2011**
(21) Anmeldenummer: 08011327.7
(22) Anmeldetag: 23.06.2008
(51) Int. Cl.: A01G 3/037

(54) **Astscheere**
Branch shears
Cisailles

(43) Veröffentlichungstag der Anmeldung: 30.12.2009
(73) Patentinhaber: Metabowerke GmbH, 72622 Nürtingen (DE)
(72) Erfinder: Wilke, Dirk, 72582 Grabenstetten (DE); Lorek, Patricia, 72636 Frickenhausen (DE)
(74) Vertreter: Raunecker, Klaus Peter

(56) Entgegenhaltungen:
- EP-A- 0 803 187
- DE-U1- 9 401 672

## Beschreibung

Die vorliegende Erfindung betrifft eine Astschere, umfassend ein erstes Scherenteil und ein relativ zu dem ersten Scherenteil bewegbares zweites Scherenteil, eine motorische Antriebseinrichtung zum Antrieb mindestens eines Scherenteils, eine handbetätigbare Steuereinrichtung zur Auswahl einer Antriebsrichtung, wobei die Steuereinrichtung zum Öffnen der Scherenteile in eine erste Betätigungslage und zum Schließen der Scherenteile in eine zweite Betätigungslage überführbar ist.

Aus der EP 0 291 431 A1, der DE 94 01 672 U1 und aus der DE 196 16 949 A1 sind Astscheren bekannt, welche zum Antrieb eines Scherenteils einen Elektromotor aufweisen, dessen Drehrichtung umkehrbar ist, so dass sowohl das Öffnen als auch das Schließen der Scherenteile elektromotorisch angetrieben erfolgt.

Astscheren werden oft unter ungünstigen Bedingungen, das heißt in unübersichtlichem Gelände und auch bei schlechter Witterung eingesetzt. Zur Bereitstellung ausreichender Schnittkräfte ist eine entsprechend stabile und somit schwere Ausführung der Scherenteile und der Antriebseinrichtung erforderlich, wodurch die Führung und Positionierung der Astschere erschwert sind. Gleichzeitig ist es beim Arbeiten mit einer Astschere erforderlich, sorgfältig und konzentriert zu arbeiten, um Schäden durch herabfallende Äste oder durch Kontakt mit den scharfen Schnittkanten der Scherenteile zu vermeiden.

Hiervon ausgehend liegt der vorliegenden Erfindung die Aufgabe zugrunde, eine Astschere zu schaffen, welche möglichst einfach handhabbar ist.

Diese Aufgabe wird bei einer Astschere der eingangs genannten Art dadurch gelöst, dass sie eine mit mindestens einem angetriebenen Scherenteil zumindest mittelbar bewegungsgekoppelte oder bewegungskoppelbare Blockiereinrichtung umfasst, mittels welcher die Steuereinrichtung derart blockierbar ist, dass in einer ersten Scherenteilendlage, in welcher die Scherenteile vollständig geöffnet sind, eine Überführung der Steuereinrichtung in die erste Betätigungslage ausgeschlossen ist, und/oder dass in einer zweiten Scherenteilendlage, in welcher die Scherenteile vollständig geschlossen sind, eine Überführung der Steuereinrichtung in die zweite Betätigungslage ausgeschlossen ist.

Die erfindungsgemäße Blockiereinrichtung ermöglicht es, eine Fehlbedienung der Astschere zu verhindern, indem die Steuereinrichtung in zumindest einer der Scherenteilendlagen so blockiert wird, dass die Überführung der Steuereinrichtung in eine der Betätigungslagen ausgeschlossen ist.

Durch die Blockierung der Steuereinrichtung erhält eine Bedienperson eine haptische Rückmeldung darüber, dass die Scherenteile eine Scherenteilendlage erreicht haben. Dies ist insbesondere dann vorteilhaft, wenn der Wirkbereich der Scherenteile sich in weiterer Entfernung zu der Bedienperson befindet oder auch wenn eine direkte Sicht auf die Scherenteile beispielsweise durch Blattwerk behindert wird. Mit einer Blockierung des Steuerteils, welcher eine Überführung in eine der Betätigungslagen ausschließt, geht insbesondere einher, dass die Steuereinrichtung in diesem Zustand lediglich in die andere Betätigungslage überführbar ist. Hierdurch wird eine besonders einfache und sichere Handhabbarkeit der Astschere erreicht.

In vorteilhafter Weise umfasst die Blockiereinrichtung mindestens ein Blockierelement, welches zumindest in der ersten Scherenteilendlage und/oder in der zweiten Scherenteilendlage unmittelbar mit der Steuereinrichtung bewegungsgekoppelt ist. Auf diese Weise ist es möglich, dass die Blockiereinrichtung direkt - also ohne Zwischenschaltung weiterer Bauteile - auf die Steuereinrichtung einwirkt, wenn die Scherenteile der Astschere in ihre erste oder zweite Scherenteilendlage einnehmen.

Ferner ist es bevorzugt, wenn die Blockiereinrichtung mindestens ein Blockierelement umfasst, welches zumindest in der ersten Scherenteilendlage und/oder in der zweiten Scherenteilendlage unmittelbar mit mindestens einem angetriebenen Scherenteil bewegungsgekoppelt ist. Auf diese Weise ist eine direkte und somit sehr einfache Übertragung der Bewegung eines angetriebenen Scherenteils auf das Blockierelement ermöglicht.

Besonders bevorzugt ist es, wenn die Blockiereinrichtung mindestens ein Blockierelement umfasst, welches zumindest in der ersten Scherenteilendlage und/oder in der zweiten Scherenteilendlage sowohl unmittelbar mit der Steuereinrichtung als auch unmittelbar mit mindestens einem angetriebenen Scherenteil bewegungsgekoppelt ist. Auf diese Weise kann ein direkter Kraftfluss zwischen einem angetriebenen Scherenteil, dem Blockierelement und der Steuereinrichtung geschaffen werden, so dass ein zuverlässiges Blockieren der Steuereinrichtung mit einem sehr einfachen Aufbau der Astschere gewährleistet ist.

Vorzugsweise ist das mindestens eine Blockierelement bewegbar gelagert. Hierdurch ist eine besonders einfache Bewegungskopplung oder Bewegungskoppelbarkeit mit der Steuereinrichtung und/oder mindestens einem angetriebenen Scherenteil ermöglicht.

Nach einer vorteilhaften Ausführungsform der Erfindung ist vorgesehen, dass die Position des mindestens einen Blockierelements relativ zu der Steuereinrichtung und/oder zumindest einem angetriebenen Scherenteil einstellbar ist. Auf diese Weise ist es möglich, zumindest einen der Relativwinkel, welche die Scherenteile in der vollständig geöffneten oder in der vollständig geschlossenen Stellung einnehmen, einstellen zu können.

Ferner ist es bevorzugt, wenn das mindestens eine Blockierelement zwischen einer Ruhestellung, in welcher die Steuereinrichtung in zumindest eine Betätigungslage überführbar ist, und einer Blockierstellung, in welcher die Steuereinrichtung in zumindest eine Betätigungslage nicht überführbar ist, bewegbar ist. Hierdurch ist es für Scherenteilzwischenlagen möglich, die Bewegung des Blockierelements von der Bewegung der Scherenteile zu entkoppeln.

Besonders bevorzugt ist es, wenn das mindestens eine Blockierelement derart kraftbeaufschlagt ist, dass die Ruhestellung des Blockierelements eine Vorzugsstellung ist. Auf diese Weise kann das mindestens eine Blockierelement in seiner Ruhestellung gehalten werden, so dass in Scherenteilzwischenlagen eine Bedienung der Astschere erfolgen kann, welche von dem mindestens einen Blockierelement unbeeinflusst ist.

Besonders bevorzugt ist es, wenn die Blockiereinrichtung ein erstes Blockierelement umfasst, welches der ersten Scherenteilendlage zugeordnet ist, und dass die Blockiereinrichtung ein zweites Blockierelement umfasst, welches der zweiten Scherenteilendlage zugeordnet ist. Hierdurch kann die Blockierung der Steuereinrichtung bei Erreichen einer Scherenteilendstellung mittels eines Blockierelements erfolgen, welches dieser Scherenteilendlage zugeordnet ist. Hierdurch wird der konstruktive Aufbau der Astschere vereinfacht.

Besonders bevorzugt ist es, wenn das erste Blockierelement und das zweite Blockierelement relativ zueinander bewegbar sind. Hierdurch kann die Steuereinrichtung in einfacher Weise in jeder der Scherenteilendlagen mittels eines jeweils zugeordneten Blockierelements blockiert werden.

Vorzugsweise ist die Steuereinrichtung in mindestens eine Ruhelage überführbar, in welcher die Antriebseinrichtung deaktiviert ist. In einer Scherenteilzwischenlage können die Scherenteile dann so angesteuert werden, dass die Scherenteile öffnen, schließen oder anhalten.

Besonders bevorzugt ist es, wenn die Steuereinrichtung durch Handbetätigung in eine Ruhelage überführbar ist, in welcher die Antriebseinrichtung deaktiviert ist. Dies ermöglicht eine besonders einfache Bedienung der Astschere.

Eine besonders bevorzugte Ausführungsform der Erfindung sieht vor, dass die Astschere mindestens eine Stelleinrichtung umfasst, mittels welcher die Steuereinrichtung derart bewegbar ist, dass das Erreichen der ersten Scherenteilendstellung mit einer Überführung der Steuereinrichtung aus der ersten Betätigungslage in eine Ruhelage einhergeht, in welcher die Antriebseinrichtung deaktiviert ist, und/oder das Erreichen der zweiten Scherenteilendstellung mit einer Überführung der Steuereinrichtung aus der zweiten Betätigungslage in eine Ruhelage einhergeht, in welcher die Antriebseinrichtung deaktiviert ist. Auf diese Weise erhält eine Bedienperson bei Erreichen einer Scherenteilendstellung eine besonders deutliche haptische Rückmeldung hierüber, indem die Steuereinrichtung infolge des Erreichens einer Scherenteilendstellung aus einer Betätigungslage heraus bewegt wird, was für eine Bedienperson insbesondere als Gegendruck einer Bedienfläche der Steuereinrichtung spürbar ist. Somit ist es für eine Bedienperson sofort und eindeutig erkennbar, dass die Scherenteile eine Endstellung erreicht haben.

Besonders bevorzugt ist es, wenn die Blockiereinrichtung als Stelleinrichtung wirksam ist. Hierdurch ist es möglich, die Funktionen des Blockierens der Steuereinrichtung und der Rückführung der Steuereinrichtung aus einer Betätigungslage in eine Ruhelage mit derselben Einrichtung realisieren zu können. Insbesondere kann mit Hilfe mindestens eines vorstehend beschriebenen Blockierelements sowohl eine Blockierung einer Betätigungslage als auch die Überführung der Steuereinrichtung aus dieser Betätigungslage heraus in eine Ruhelage erfolgen.

Eine vorteilhafte Ausführungsform der Erfindung sieht vor, dass die Steuereinrichtung einen Wippschalter umfasst. Ein solcher Wippschalter ermöglicht es, die erste Betätigungslage und die zweite Betätigungslage der Steuereinrichtung miteinander zu koppeln, so dass diese nicht gleichzeitig in die erste Betätigungslage und in die zweite Betätigungslage überführbar ist.

Ferner ist es bevorzugt, wenn die Steuereinrichtung eine erste Schalteinrichtung umfasst, welche in der ersten Betätigungslage der Steuereinrichtung aktiviert ist, und wenn die Steuereinrichtung eine zweite Schalteinrichtung umfasst, welche in der zweiten Betätigungslage aktiviert ist, wobei die erste Schalteinrichtung und die zweite Schalteinrichtung einander entgegengesetzten Antriebsrichtungen zugeordnet sind. Dies ermöglicht eine einfache Kopplung einer Betätigungslage mit einer Antriebsrichtung der Antriebseinrichtung. Beispielsweise erfolgt die Auswahl der Antriebsrichtung durch Drehrichtungsumkehr eines Motors, insbesondere eines Elektromotors.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine schematisierte Seitenansicht einer Ausführungsform einer Astschere mit relativ zueinander bewegbaren Scherenteilen und mit einer Steuereinrichtung, welche zum Öffnen der Scherenteile in eine erste Betätigungslage und zum Schließen der Scherenteile in eine zweite Betätigungslage überführbar ist;
- Figur 2: eine schematisierte Seitenansicht der Astschere gemäß Figur 1; wobei die Steuereinrichtung zum Schließen der Scherenteile in ihre zweite Betätigungslage überführt ist;
- Figur 3: eine schematisierte Seitenansicht der Astschere gemäß Figur 1, wobei die Scherenteile eine Scherenteilendstellung einnehmen, in welcher die Scherenteile vollständig geschlossen sind;
- Figur 4: eine schematisierte Seitenansicht der Astschere gemäß Figur 1, wobei die Steuereinrichtung zum Öffnen der Scherenteile in ihre erste Betätigungslage überführt ist;
- Figur 5: eine schematisierte Seitenansicht der Astschere gemäß Figur 1 während des Öffnens der Scherenteile;
- Figur 6: eine schematisierte Seitenansicht der Astschere gemäß Figur 1, wobei die Scherenteile eine Scherenteilendstellung einnehmen, in welcher die Scherenteile vollständig geöffnet sind;
- Figur 7: eine schematische Darstellung des schaltungstechnischen Aufbaus der Astschere gemäß Figur 1.

Gleiche oder funktional äquivalente Elemente sind in allen Figuren mit denselben Bezugszeichen bezeichnet.

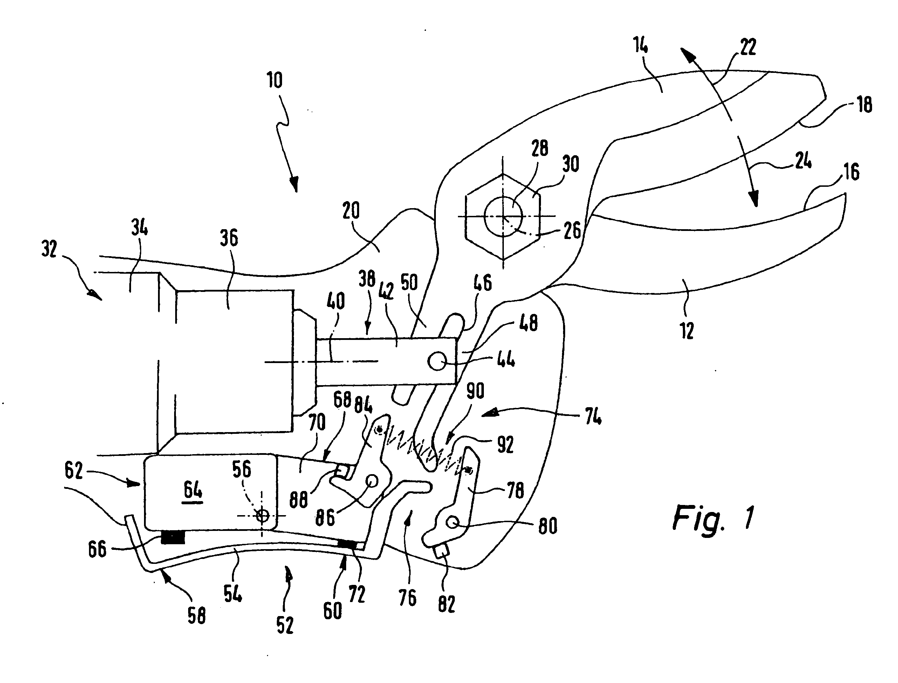

Eine Ausführungsform einer mit 10 bezeichneten Astschere ist in den Figuren 1 bis 7 dargestellt. Die Astschere 10 weist ein erstes Scherenteil 12 sowie ein zweites Scherenteil 14 auf, welches relativ zu dem Scherenteil 12 bewegbar ist. Das erste Scherenteil 12 weist eine dem zweiten Scherenteil 14 zugewandte Schneidkante 16 auf, welche mit einer Schneidkante 18 des zweiten Scherenteils 14 zusammenwirkt.

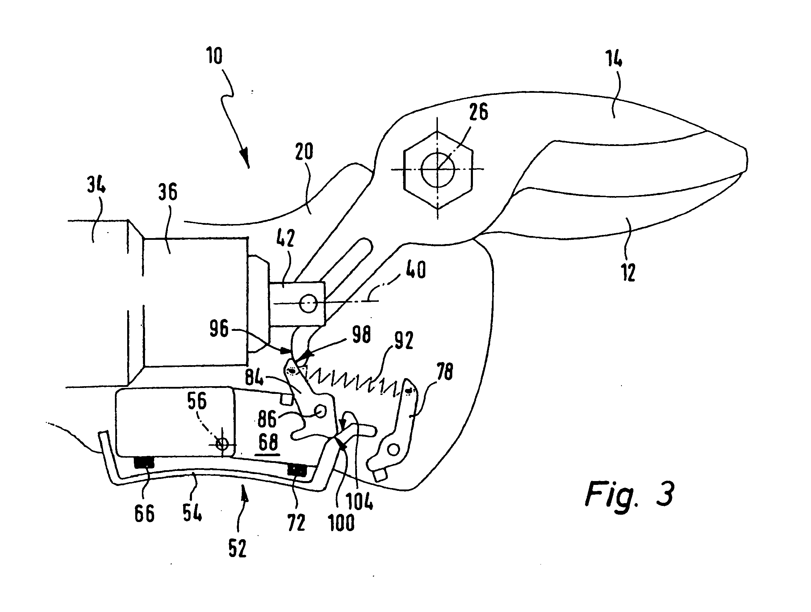

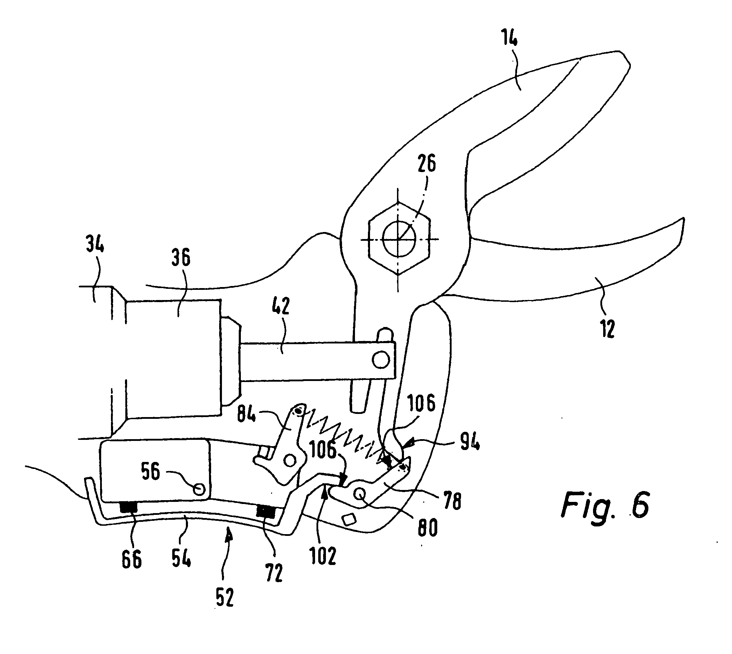

Das erste Scherenteil 12 ist fest mit einem Gehäuse 20 der Astschere 10 verbunden. Das zweite Scherenteil 14 ist in einer Öffnungsrichtung 22 bis hin zu einer ersten Scherenteilendlage, in welcher die Schneidkanten 16 und 18 einen maximalen Öffnungswinkel begrenzen, verschwenkbar (vergleiche Figur 6). Ferner ist das zweite Scherenteil 14 in einer Schließrichtung 24 verschwenkbar, bis hin zu einer zweiten Scherenteilendlage, in welcher in welcher die Schneidkanten 16 und 18 einen minimalen Öffnungswinkel begrenzen (vergleiche Figur 3).

Das zweite Scherenteil 14 ist in Öffnungsrichtung 22 und Schließrichtung 24 um eine gehäusefeste Schwenkachse 26 verschwenkbar. Die Schwenkachse 26 ist durch einen Bolzen 28 definiert, welcher mit einer Bolzensicherung 30 gesichert ist.

Die Astschere 10 umfasst ferner eine motorische Antriebseinrichtung 32 mit einem Elektromotor 34, einem Getriebe 36 sowie einem Antriebselement 38. Das Antriebselement 38 ist längs einer Antriebsachse 40 verschieblich und insbesondere in Form einer Gewindestange ausgebildet.

Das Antriebselement 38 ist fest mit einem Antriebskörper 44 verbunden, welcher insbesondere bolzenförmig ist. Der Antriebskörper 44 wirkt mit einer Kulisse 46 zusammen, welche von zueinander im Wesentlichen parallelen Scherenteilabschnitten 48 und 50 begrenzt ist. Die Scherenteilabschnitte 48 und 50 sind insbesondere einstückig mit dem zweiten Scherenteil 14 ausgebildet.

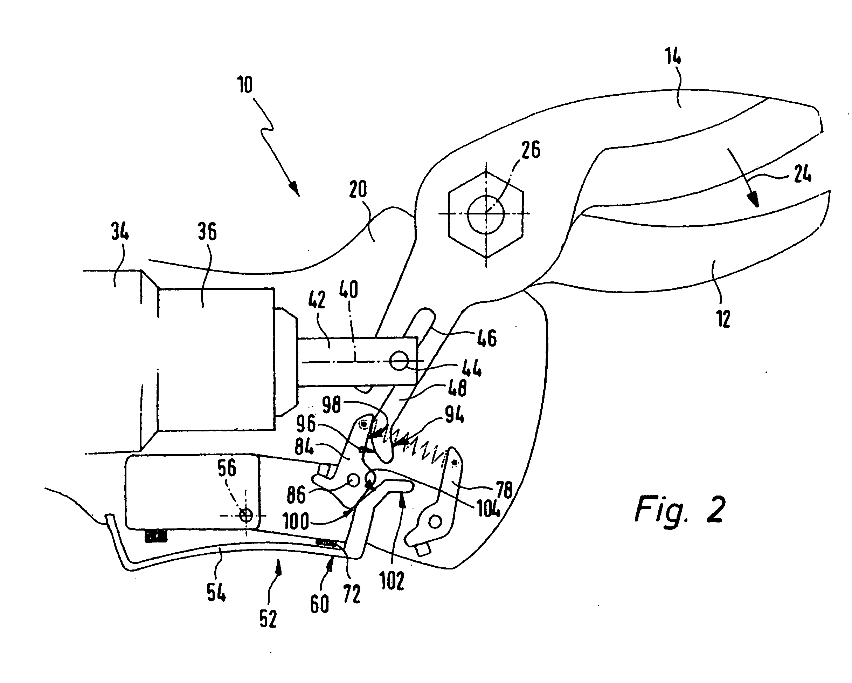

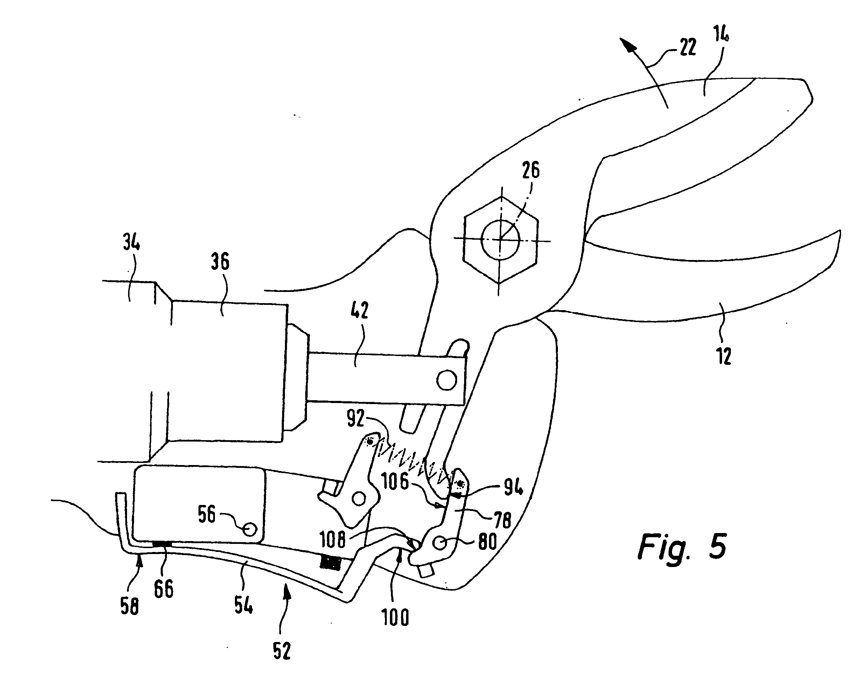

Ferner umfasst die Astschere 10 eine insgesamt mit 52 bezeichnete Steuereinrichtung. Diese weist einen Wippschalter 54 auf, welcher um eine Wippschalterachse 56 verschwenkbar ist. Der Wippschalter 54 weist eine erste Betätigungsfläche 58 auf, mit welcher die Steuereinrichtung 52 zum Öffnen der Scherenteile 12, 14 in eine erste Betätigungslage (vergleiche Figur 5) überführbar ist. Ferner weist der Wippschalter 54 eine zweite Betätigungsfläche 60 auf, mit welcher die Steuereinrichtung 52 zum Schließen der Scherenteile 12, 14 in eine zweite Betätigungslage (vergleiche Figur 2) überführbar ist.

Der ersten Betätigungsfläche 58 zugeordnet ist eine erste Schalteinrichtung 62 mit einem ersten Wechselschalter 64 und einem ersten Tastschalter 66. Der zweiten Betätigungsfläche 60 zugeordnet ist eine zweite Schalteinrichtung 68 mit einem zweiten Wechselschalter 70 und einem zweiten Tastschalter 72. In ihrem in die erste Betätigungslage überführten Zustand wird die Antriebseinrichtung 32 mit Hilfe der Steuereinrichtung 52 so angesteuert, dass das zweite Scherenteil 14 in Öffnungsrichtung 22 um die Schwenkachse 26 verschwenkt wird. In der zweiten Betätigungslage wird die Antriebseinrichtung 32 mit Hilfe der Steuereinrichtung 52 so angesteuert, dass das zweite Scherenteil 14 in Schließrichtung 24 um die Schwenkachse 26 verschwenkt wird.

Die Astschere 10 weist ferner eine insgesamt mit 74 bezeichnete Blockiereinrichtung auf, mit welcher jeweils eine der Betätigungslagen der Steuereinrichtung 52 blockierbar ist, wenn die Scherenteile 12 und 14 eine der Scherenteilendlagen einnehmen.

Ferner umfasst die Astschere 10 eine insgesamt mit 76 bezeichnete Stelleinrichtung, mit welcher durch Überführung der Scherenteile 12 und 14 in eine Scherenteilendlage eine Rückführung der Steuereinrichtung 52 aus einer Betätigungslage heraus in eine Ruhelage (vergleiche Figuren 3 und 6) erfolgt. Hierbei ist die Blockiereinrichtung 74 gleichzeitig als Stelleinrichtung 76 wirksam, wobei die Bauteile der Blockiereinrichtung 74, welche im Folgenden näher beschrieben werden, gleichzeitig Funktionen der Stelleinrichtung 76 realisieren.

Die Blockiereinrichtung 74 umfasst ein erstes Blockierelement 78, welches um eine gehäusefeste erste Schwenkachse 80 verschwenkbar ist und in einer Ruhestellung (vergleiche Figur 1) an einem gehäusefesten Anschlag 82 anliegt. Das erste Blockierelement 78 ist der ersten Scherenteilendlage (vergleiche Figur 6) zugeordnet.

Die Blockiereinrichtung 74 weist ferner ein zweites Blockierelement 84 auf, welches um eine gehäusefeste zweite Schwenkachse 86 verschwenkbar ist und in einer Ruhestellung (vergleiche Figur 1) an einem gehäusefesten Anschlag 88 anliegt. Das zweite Blockierelement 84 ist der zweiten Scherenteilendlage (vergleiche Figur 3) zugeordnet.

Die Blockierelemente 78 und 84 sind relativ zueinander bewegbar. Die Blockierelemente 82 und 84 sind mittels einer Kraftbeaufschlagungseinrichtung 90, welche insbesondere als Zugfeder 92 ausgebildet ist, kraftbeaufschlagt. Vorzugsweise wirkt dieselbe Kraftbeaufschlagungseinrichtung 90 sowohl auf das erste Blockierelement 78 als auch auf das zweite Blockierelement 84. Mit Hilfe der Kraftbeaufschlagungseinrichtung 90 werden die Blockierelemente 78 und 84 in Zwischenlagen der Scherenteile 12 und 14, also in von Scherenteilendlagen abweichenden Lagen, in ihrer Ruhestellung gehalten, in welcher sie an jeweils einem der Anschläge 82 und 88 anliegen.

In der in Figur 1 dargestellten Zwischenlage der Scherenteile 12 und 14 ist die Blockiereinrichtung 74 inaktiv. In einer solchen Scherenteillage kann die Steuereinrichtung 52 beispielsweise mit Hilfe der zweiten Betätigungsfläche 60 in ihre zweite Betätigungslage überführt werden, wodurch die zweite Schalteinrichtung 68 derart angesteuert wird, dass der Elektromotor 34 so dreht, dass die Gewindestange 42 entlang der Antriebsachse 40 in Richtung auf den Elektromotor 34 bewegt wird. Hierdurch gleitet der Antriebskörper 44 innerhalb der Kulisse 46 des Scherenteils 14, so dass das Scherenteil 14 in Schließrichtung 24 um die Schwenkachse 26 verschwenkt wird (vergleiche Figur 2).

Das Scherenteil 14 weist an einem freien Ende des Scherenteilabschnitts 48 eine erste Scherenteilanlagefläche 94 sowie eine zweite Scherenteilanlagefläche 96 auf. Die Scherenteilanlageflächen 94 und 96 sind insbesondere durch Außenflächen des zweiten Scherenteils 14 gebildet. Die Scherenteilanlageflächen 94 und 96 können voneinander getrennt vorgesehen sein oder können, wie in der Zeichnung dargestellt, kontinuierlich ineinander übergehen.

Das zweite Blockierelement 84 weist eine Scherenteilkoppelfläche 98 auf, welche in der zweiten Scherenteilendlage und in hierzu benachbarten Lagen der Scherenteile 12 und 14 mit der zweiten Scherenteilanlagefläche 96 zusammenwirkt, indem die Flächen 96 und 98 aneinander anliegen und aufeinander abgleiten, so dass das Scherenteil 14 und das zweite Blockierelement 84 miteinander bewegungsgekoppelt sind.

Das zweite Blockierelement 84 weist ferner eine Steuereinrichtungskoppelfläche 100 auf, welche in der zweiten Scherenteilendlage und in hierzu benachbarten Lagen mit dem Wippschalter 54 der Steuereinrichtung 52 zusammenwirkt.

Die Steuereinrichtung 52 umfasst außerdem eine erste Steuereinrichtungsanlagefläche 102, welche dem ersten Blockierelement 78 zugeordnet ist, sowie eine zweite Steuereinrichtungsanlagefläche 104, welche dem zweiten Blockierelement 84 zugeordnet ist. Vorzugsweise sind die Steuereinrichtungsanlageflächen 102 und 104 von einander abgewandten Oberflächen des Wippschalters 54 gebildet.

Ausgehend aus der in Figur 1 dargestellten Scherenteilzwischenlage wird die zweite Scherenteilanlagefläche 96 des Scherenteils 14 durch Schließen des Scherenteils 14 in Schließrichtung 24 in Anlage mit der Scherenteilkoppelfläche 98 des zweiten Blockierelements 84 gebracht (vergleiche Figur 2). Durch weiteres Schließen des Scherenteils 14 in die in Figur 3 dargestellte zweite Scherenteilendlage wird das zweite Blockierelement 84 um die zweite Schwenkachse 86 verschwenkt, indem die zweite Scherenteilanlagefläche 96 des zweiten Scherenteils 14 auf die Scherenteilkoppelfläche 98 des zweiten Blockierelements 84 drückt.

Durch Schwenken des zweiten Blockierelements 84 um die zweite Schwenkachse 86 drückt die Steuereinrichtungskoppelfläche 100 des zweiten Blockierelements 84 auf die zweite Steuereinrichtungsanlagefläche 104, so dass der Wippschalter 54 der Steuereinrichtung 52 aus der in Figur 2 dargestellten zweiten Betätigungslage in eine in Figur 3 dargestellte Ruhelage bewegt wird.

In der in Figur 3 dargestellten zweiten Scherenteilendlage ist eine Überführung der Steuereinrichtung 52 in die zweite Betätigungslage ausgeschlossen, indem das zweite Blockierelement 84 eine entsprechende Bewegung des Wippschalters 54 blockiert. Hierbei nimmt das zweite Blockierelement 84 eine Blockierstellung ein, in welcher ein durchgehender Kraftfluss zwischen dem Wippschalter 54, dem zweiten Blockierelement 84 und dem zweiten Scherenteil 14 hergestellt ist.

Durch Überführung der Steuereinrichtung 52 aus der zweiten Betätigungslage in die Ruhelage wird nicht nur eine mechanische Blockierung der Steuereinrichtung 52 bezüglich der zweiten Betätigungslage erreicht, sondern es erfolgt gleichzeitig eine Deaktivierung der zweiten Schalteinrichtung 68 durch Ausschalten des zweiten Tastschalters 72. Auf diese Weise wird bei Erreichen der zweiten Scherenteilendlage der Elektromotor 34 abgeschaltet.

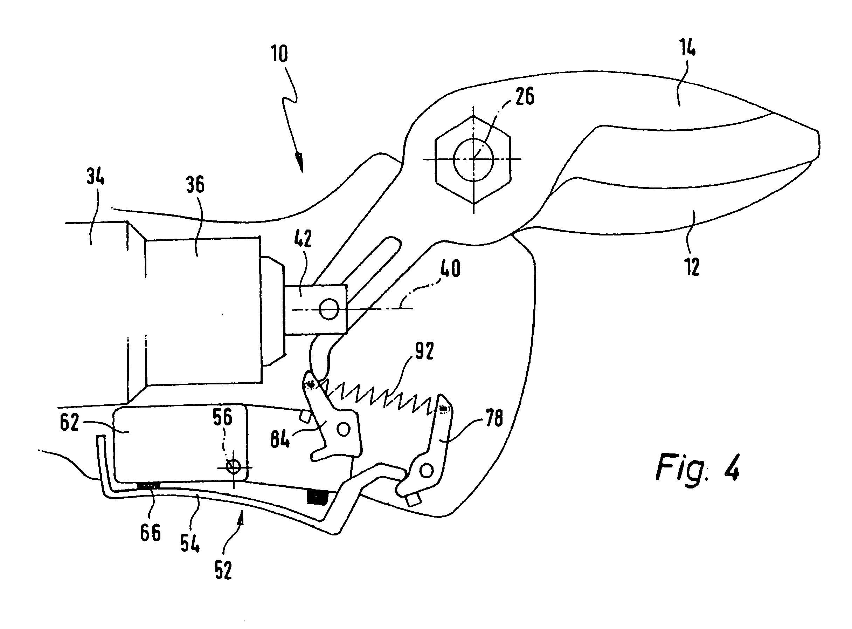

Um die Astschere 10 aus der in Figur 3 dargestellten zweiten Scherenteilendlage heraus zu öffnen, kann die Steuereinrichtung 52 aus ihrer Ruhelage heraus in ihre in Figur 4 dargestellte erste Betätigungslage überführt werden, indem eine Bedienperson auf die erste Betätigungsfläche 58 des Wippschalters 54 drückt. Hierdurch wird der Elektromotor 34 so angesteuert, dass die Gewindestange 42 entlang der Antriebsachse 40 ausfährt und das zweite Scherenteil 14 in Schwenkrichtung 22 öffnet (vergleiche Figur 5). Durch Öffnung des Scherenteils 14 gelangt das zweite Scherenteil 14 außer Eingriff mit dem zweiten Blockierelement 84 und in Eingriff mit dem ersten Blockierelement 78.

Das erste Blockierelement 78 weist eine Scherenteilkoppelfläche 106 auf sowie eine Steuereinrichtungskoppelfläche 108. Nach Anlage der ersten Scherenteilanlagefläche 94 an die Scherenteilkoppelfläche 106 des ersten Blockierelements 78 wird dieses um die erste Schwenkachse 80 verschwenkt, so dass die Scherenteilkoppelfläche 106 die erste Steuereinrichtungsanlagefläche 102 derart mit Kraft beaufschlagt, dass der Wippschalter 54 der Steuereinrichtung 52 um die Wippschalterachse 56 herum verschwenkt und der Wippschalter 54 aus der ersten Betätigungslage (vergleiche Figur 5) in eine Ruhelage (vergleiche Figur 6) überführt wird.

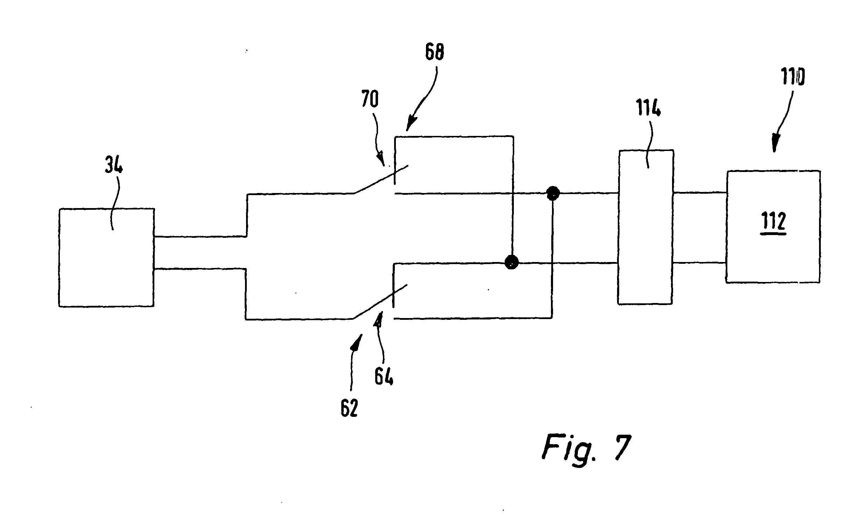

Die Astschere 10 umfasst insbesondere unter Bezugnahme auf Figur 7 eine Energieversorgungseinrichtung 110, insbesondere in Form eines Akkumulators 112. Ferner umfasst die Astschere 10 eine Elektronikeinheit 114. Die Wechselschalter 64 und 70 der Schalteinrichtungen 62 und 68 ermöglichen ein wechselseitiges Schließen eines Stromkreises zwischen dem Akkumulator 112 und dem Elektromotor 34, so dass eine Drehrichtungsumkehr des Elektromotors 34 in einfacher Weise realisierbar ist.

In besonders vorteilhafter Weise sind die Scherenteilkoppelflächen 98, 106 und die Steuereinrichtungskoppelflächen 100, 108 jeweils eines Blockierelements 78, 84 durch jeweils eine gemeinsame Außenfläche eines Blockierelements 78, 84 gebildet.

## Patentansprüche

1. Astschere, umfassend ein erstes Scherenteil (12) und ein relativ zu dem ersten Scherenteil (12) bewegbares zweites Scherenteil (14), eine motorische Antriebseinrichtung (32) zum Antrieb mindestens eines Scherenteils (12, 14), eine handbetätigbare Steuereinrichtung (52) zur Auswahl einer Antriebsrichtung, wobei die Steuereinrichtung (52) zum Öffnen der Scherenteile in eine erste Betätigungslage und zum Schließen der Scherenteile (12, 14) in eine zweite Betätigungslage überführbar ist, **gekennzeichnet durch** eine mit mindestens einem angetriebenen Scherenteil (12, 14) zumindest mittelbar bewegungsgekoppelte oder bewegungskoppelbare Blockiereinrichtung (74), mittels welcher die Steuereinrichtung (52) derart blockierbar ist, dass in einer ersten Scherenteilendlage, in welcher die Scherenteile (12, 14) vollständig geöffnet sind, eine Überführung der Steuereinrichtung (52) in die erste Betätigungslage ausgeschlossen ist, und/oder dass in einer zweiten Scherenteilendlage, in welcher die Scherenteile (12, 14) vollständig geschlossen sind, eine Überführung der Steuereinrichtung (52) in die zweite Betätigungslage ausgeschlossen ist.

2. Astschere nach Anspruch 1, **dadurch gekennzeichnet, dass** die Blockiereinrichtung (74) mindestens ein Blockierelement (78, 84) umfasst, welches zumindest in der ersten Scherenteilendlage und/oder in der zweiten Scherenteilendlage unmittelbar mit der Steuereinrichtung (52) bewegungsgekoppelt ist.

3. Astschere nach Anspruch 1 oder 2, **dadurch gekennzeichnet, dass** die Blockiereinrichtung (74) mindestens ein Blockierelement (78, 84) umfasst, welches zumindest in der ersten Scherenteilendlage und/oder in der zweiten Scherenteilendlage unmittelbar mit mindestens einem angetriebenen Scherenteil (12, 14) bewegungsgekoppelt ist.

4. Astschere nach Anspruch 2 oder 3, **dadurch gekennzeichnet, dass** das mindestens eine Blockierelement (78, 84) bewegbar gelagert ist.

5. Astschere nach einem der Ansprüche 2 bis 4, **dadurch gekennzeichnet, dass** die Position des mindestens einen Blockierelements (78, 84) relativ zu der Steuereinrichtung (52) und/oder zu mindestens einem angetriebenen Scherenteil (12, 14) einstellbar ist.

6. Astschere nach einem der Ansprüche 2 bis 5, **dadurch gekennzeichnet, dass** das mindestens eine Blockierelement (78, 84) zwischen einer Ruhestellung, in welcher die Steuereinrichtung (52) in zumindest eine Betätigungslage überführbar ist, und einer Blockierstellung, in welcher die Steuereinrichtung in zumindest eine Betätigungslage nicht überführbar ist, bewegbar ist.

7. Astschere nach Anspruch 6, **dadurch gekennzeichnet, dass** das mindestens eine Blockierelement (78, 84) derart kraftbeaufschlagt ist, dass die Ruhestellung des Blockierelements (78, 84) eine Vorzugsstellung ist.

8. Astschere nach einem der voranstehenden Ansprüche, **dadurch gekennzeichnet, dass** die Blockiereinrichtung (74) ein erstes Blockierelement (78) umfasst, welches der ersten Scherenteilendlage zugeordnet ist, und dass die Blockiereinrichtung ein zweites Blockierelement (84) umfasst, welches der zweiten Scherenteilendlage zugeordnet ist.

9. Astschere nach Anspruch 8, **dadurch gekennzeichnet, dass** das erste Blockierelement (78) und das zweite Blockierelement (84) relativ zueinander bewegbar sind.

10. Astschere nach einem der voranstehenden Ansprüche, **dadurch gekennzeichnet, dass** die Steuereinrichtung (52) in mindestens eine Ruhelage überführbar ist, in welcher die Antriebseinrichtung (32) deaktiviert ist.

11. Astschere einem der voranstehenden Ansprüche, **dadurch gekennzeichnet, dass** die Steuereinrichtung (52) durch Handbetätigung in eine Ruhelage überführbar ist, in welcher die Antriebseinrichtung (32) deaktiviert ist.

12. Astschere einem der voranstehenden Ansprüche, **gekennzeichnet durch** mindestens eine Stelleinrichtung (76), mittels welcher die Steuereinrichtung (52) derart bewegbar ist, dass das Erreichen der ersten Scherenteilendstellung mit einer Überführung der Steuereinrichtung (52) aus der ersten Betätigungslage in eine Ruhelage einhergeht, in welcher die Antriebseinrichtung (32) deaktiviert ist, und/oder dass das Erreichen der zweiten Scherenteilendstellung mit einer Überführung der Steuereinrichtung (52) aus der zweiten Betätigungslage in eine Ruhelage einhergeht, in welcher die Antriebseinrichtung (32) deaktiviert ist.

13. Astschere nach Anspruch 12, **dadurch gekennzeichnet, dass** die Blockiereinrichtung (74) als Stelleinrichtung (76) wirksam ist.

14. Astschere nach einem der voranstehenden Ansprüche, **dadurch gekennzeichnet, dass** die Steuereinrichtung (52) einen Wippschalter (54) umfasst.

15. Astschere nach einem der voranstehenden Ansprüche, **dadurch gekennzeichnet, dass** die Steuereinrichtung (52) eine erste Schalteinrichtung (62) umfasst, welche in der ersten Betätigungslage der Steuereinrichtung (52) aktiviert ist, und dass die Steuereinrichtung eine zweite Schalteinrichtung (68) umfasst, welche in der zweiten Betätigungslage der Steuereinrichtung (52) aktiviert ist, wobei die erste Schalteinrichtung (62) und die zweite Schalteinrichtung (68) einander entgegengesetzten Antriebsrichtungen zugeordnet sind.

## Claims

1. Branch shears comprising a first shearing part (12) and a second shearing part (14) which is movable relative to said first shearing part (12), a motorised driving apparatus (32) for driving at least one shearing part (12, 14), and a manually actuatable control apparatus (52) for selecting a driving direction, wherein said control apparatus (52) can be transferred into a first actuating position for the purpose of opening the shearing parts and into a second actuating position for the purpose of closing said shearing parts (12, 14), **characterised by** a locking apparatus (74) which is, or can be, motionally coupled, at least indirectly, to at least one driven shearing part (12, 14) and by means of which the control apparatus (52) can be locked in such a way that, in a first end position of the shearing parts in which said shearing parts (12, 14) are completely open, a transfer of the control apparatus (52) into the first actuating position is precluded, and/or that, in a second end position of the shearing parts in which said shearing parts (12, 14) are completely closed, a transfer of the control apparatus (52) into the second actuating position is precluded.

2. Branch shears according to claim 1, **characterised in that** the locking apparatus (74) comprises at least one locking element (78, 84) which is motionally coupled directly to the control apparatus (52), at least in the first end position of the shearing parts and/or in the second end position of said shearing parts.

3. Branch shears according to claim 1 or 2, **characterised in that** the locking apparatus (74) comprises at least one locking element (78, 84) which is motionally coupled directly to at least one driven shearing part (12, 14), at least in the first end position of the shearing parts and/or in the second end position of said shearing parts.

4. Branch shears according to claim 2 or 3, **characterised in that** the at least one locking element (78, 84) is mounted in a movable manner.

5. Branch shears according to one of claims 2 to 4, **characterised in that** the position of the at least one locking element (78, 84) can be set relative to the control apparatus (52) and/or to at least one driven shearing part (12, 14).

6. Branch shears according to one of claims 2 to 5, **characterised in that** the at least one locking element (78, 84) can be transferred between an inoperative position in which the control apparatus (52) can be transferred into at least one actuating position, and a locking position in which said control apparatus cannot be transferred into at least one actuating position.

7. Branch shears according to claim 6, **characterised in that** the at least one locking element (78, 84) is subjected to a force in such a way that the inoperative position of said locking element (78, 84) is a preferred position.

8. Branch shears according to one of the preceding claims, **characterised in that** the locking apparatus (74) comprises a first locking element (78) which is associated with the first end position of the shearing parts, and that said locking apparatus comprises a second locking element (84) which is associated with the second end position of the shearing parts.

9. Branch shears according to claim 8, **characterised in that** the first locking element (78) and the second locking element (84) are movable relative to one another.

10. Branch shears according to one of the preceding claims, **characterised in that** the control apparatus (52) can be transferred into at least one inoperative position in which the driving apparatus (32) is deactivated.

11. Branch shears according to one of the preceding claims, **characterised in that** the control apparatus (52) can be transferred, by manual actuation, into an inoperative position in which the driving apparatus (32) is deactivated.

12. Branch shears according to one of the preceding claims, **characterised by** at least one positioning apparatus (76) by means of which the control apparatus (52) can be moved in such a way that the reaching of the first end position of the shearing parts accompanies a transfer of the control apparatus (52) out of the first actuating position and into an inoperative position in which the driving apparatus (32) is deactivated, and/or that the reaching of the second end position of the shearing parts accompanies a transfer of the control apparatus (52) out of the second actuating position and into an inoperative position in which the driving apparatus (32) is deactivated.

13. Branch shears according to claim 12, **characterised in that** the locking apparatus (74) is operative as a positioning apparatus (76).

14. Branch shears according to one of the preceding claims, **characterised in that** the control apparatus (52) comprises a rocker switch (54).

15. Branch shears according to one of the preceding claims, **characterised in that** the control apparatus (52) comprises a first switching apparatus (62) which is activated when the control apparatus (52) is in the first actuating position, and that said control apparatus comprises a second switching apparatus (68) which is activated when the control apparatus (52) is in the second actuating position, the first switching apparatus (62) and second switching apparatus (68) being associated with mutually opposed driving directions.

## Revendications

1. Cisaille à élaguer comprenant une première partie de cisaille (12) et une seconde partie de cisaille (14) mobile par rapport à la première partie de cisaille (12), un dispositif d'entraînement motorisé (32) destiné à entraîner au moins une partie de cisaille (12, 14), un dispositif de commande (52) pouvant être actionné à la main, destiné à sélectionner un sens d'entraînement, dans laquelle le dispositif de commande (52) peut être basculé dans une première position d'actionnement pour ouvrir les parties de cisaille et dans une seconde position d'actionnement pour fermer les parties de cisaille (12,14), **caractérisée par** un dispositif de blocage (74) accouplé ou pouvant être accouplé cinématiquement, au moins indirectement, à au moins une partie de cisaille entraînée (12, 14), et au moyen duquel le dispositif de commande (52) peut être bloqué de telle manière que, dans une première position extrême des parties de cisaille dans laquelle les parties de cisaille (12,14) sont entièrement ouvertes, le basculement du dispositif de commande (52) dans la première position de fonctionnement soit exclu et/ou que, dans une seconde position extrême des parties de cisaille dans laquelle les parties de cisaille (12, 14) sont entièrement fermées, le basculement du dispositif de commande (52) dans la seconde position d'actionnement soit exclu.

2. Cisaille à élaguer selon la revendication 1, **caractérisée en ce que** le dispositif de blocage (74) comprend au moins un élément de blocage (78, 84) qui est accouplé cinématiquement directement au dispositif de commande (52), au moins dans la première position extrême des parties de cisaille et/ou dans la seconde position extrême des parties de cisaille.

3. Cisaille à élaguer selon la revendication 1 ou 2, **caractérisée en ce que** le dispositif de blocage (74) comprend au moins un élément de blocage (78, 84) qui est accouplé cinématiquement directement à au moins une partie de cisaille entraînée (12, 14) au moins dans la première position extrême des parties de cisaille et/ou dans la seconde position extrême des parties de cisaille.

4. Cisaille à élaguer selon la revendication 2 ou 3, **caractérisée en ce que** le au moins un élément de blocage (74, 84) est monté mobile.

5. Cisaille à élaguer selon l'une des revendications 2 à 4, **caractérisée en ce que** la position du au moins un élément de blocage (78, 84) par rapport au dispositif de commande (52) et/ou par rapport à au moins une partie de cisaille entraînée (12, 14) est réglable.

6. Cisaille à élaguer selon l'une des revendications 2 à 5, **caractérisée en ce que** le au moins un élément de blocage (78, 84) peut se déplacer entre une position de repos dans laquelle le dispositif de commande (52) peut être basculé dans au moins une position d'actionnement, et une position de blocage dans laquelle le dispositif de commande ne peut pas être basculé dans au moins une position d'actionnement.

7. Cisaille à élaguer selon la revendication 6, **caractérisée en ce que** le au moins un élément de blocage (78, 84) est sollicité par une force de telle manière que la position de repos de l'élément de blocage (78, 84) soit une position privilégiée.

8. Cisaille à élaguer selon l'une des revendications précédentes, **caractérisée en ce que** le dispositif de blocage (74) comprend un premier élément de blocage (78) qui est associé à la première position extrême des parties de cisaille, et **en ce que** le dispositif de blocage comprend un second élément de blocage (84) qui est associé à la seconde position extrême des parties de cisaille.

9. Cisaille à élaguer selon la revendication 8, **caractérisée en ce que** le premier élément de blocage (78) et le second élément de blocage (84) sont mobiles l'un par rapport à l'autre.

10. Cisaille à élaguer selon l'une des revendications précédentes, **caractérisée en ce que** le dispositif de commande (52) peut être basculé dans au moins une position de repos dans laquelle le dispositif d'entraînement (32) est désactivé.

11. Cisaille à élaguer selon l'une des revendications précédentes, **caractérisée en ce que** le dispositif de commande (52) peut être basculé par actionnement manuel dans une position de repos dans laquelle le dispositif d'entraînement (32) est désactivé.

12. Cisaille à élaguer selon l'une des revendications précédentes, **caractérisée par** au moins un dispositif de réglage (76) au moyen duquel le dispositif de commande (52) peut être déplacé de manière que l'arrivée à la première position extrême des parties de cisaille intervienne avec le basculement du dispositif de commande (52) de la première position d'actionnement dans une position de repos dans laquelle le dispositif d'entraînement (32) est désactivé, et/ou que l'arrivée à la seconde position extrême des parties de cisaille intervienne avec le basculement du dispositif de commande (52) de la seconde position d'actionnement dans une position de repos dans laquelle le dispositif d'entraînement (32) est désactivé.

13. Cisaille à élaguer selon la revendication 12, **caractérisée en ce que** le dispositif de blocage (74) agit en tant que dispositif de réglage (76).

14. Cisaille à élaguer selon l'une des revendications précédentes, **caractérisée en ce que** le dispositif de commande (52) comprend un interrupteur à bascule (54).

15. Cisaille à élaguer selon l'une des revendications précédentes, **caractérisée en ce que** le dispositif de commande (52) comprend un premier dispositif de commutation (62) qui est activé dans la première position d'actionnement du dispositif de commande (52), et **en ce que** le dispositif de commande comprend un second dispositif de commutation (68) qui est activé dans la seconde position d'actionnement du dispositif de commande (52), le premier dispositif de commutation (62) et le second dispositif de commutation (68) étant associés à des sens d'entraînement mutuellement opposés.
